# EUROPÄISCHE PATENTSCHRIFT

(11) **EP 1 125 352 B1**
(45) Veröffentlichungstag und Bekanntmachung des Hinweises auf die Patenterteilung: **22.09.2004**
(21) Anmeldenummer: 99969856.6
(22) Anmeldetag: 22.09.1999
(51) Int. Cl.: H02J 7/35

(54) **SCHUTZSYSTEM FÜR EIN SOLARMODUL**
PROTECTIVE SYSTEM FOR A SOLAR MODULE
SYSTEME DE PROTECTION D'UN MODULE SOLAIRE

(30) Priorität: 30.09.1998 DE 19844977
(43) Veröffentlichungstag der Anmeldung: 22.08.2001
(73) Patentinhaber: Shell Solar GmbH, 81739 München (DE)
(72) Erfinder: GOLDACK, Daniel, D-94469 Deggendorf (DE)
(74) Vertreter: Zeestraten, Albertus Wilhelmus Joannes
(86) Internationale Anmeldenummer: PCT/EP1999/007064
(87) Internationale Veröffentlichungsnummer: WO 2000/019580

(56) Entgegenhaltungen:
- EP-A- 0 718 952
- WO-A-97/42664
- WO-A-98/36388

## Beschreibung

Die vorliegende Erfindung betrifft ein Schutzsystem für ein Solarmodul, insbesondere zum Schutz gegen eine unbefugte Nutzung durch einen Verbraucher, ein Verfahren zur Energieübertragung von einem Solarmodul zu einem Verbraucher., eine Unterbrechungseinrichtung zur Unterbrechung einer Energieabgabe eines Solarmoduls sowie eine Freigabeeinrichtung zur Freigabe einer Energieübertragung von einem Solarmodul zu einem Verbraucher.

Durch die steigende Umweltverschmutzung gewinnt die Nutzung regenerativer Energien, wie z.B. der Sonnenenergie zunehmend an Bedeutung. Insbesondere ermöglichen immer leistungsfähigere Solarmodule eine Verwendung der regenerativen Sonnenenergie in weitreichenden Anwendungen. Gerade für kleinere bis mittlere Verbraucher, die autark von einem Energieversorgungsnetz mit Energie versorgt werden sollen, haben sich Solarmodule durch ihre hohe Leistungsfähigkeit, Wartungsfreiheit und einfache Anwendbarkeit durchgesetzt. Da jedoch die Solarmodule in der Regel an schwer überwachbaren Orten wie z.B. zur Energieversorgung eines Verkehrsschildes, das sich weit von einem Energieversorgungsnetz entfernt befindet, oder z.B. auf einem Dach eines Wohnmobiles angeordnet sind, kommt es häufig vor, daß die Solarmodule gestohlen werden oder von einem unbefugten Verbraucher genutzt werden.

Die heute üblichen Einrichtungen zum Schutz gegen eine unbefugte Nutzung oder eines Diebstahls bestehen in der Regel aus einem massiven Gehäuse in Verbindung mit einem starken Schloß. Diese Sicherungen weisen jedoch den Nachteil auf, daß sie mit mechanischen Mitteln leicht aufgebrochen werden können und darüber hinaus für einen wirksamen Schutz schwer und massiv ausgebildet sein müssen.

Aus der DE-36 41 230 C1 ist ein Verfahren und eine Schaltungsanordnung zur Diebstahlsicherung von Geräten, insbesondere Autoradiogeräten bekannt. Hierbei wird in einem Automobil ein erster Modul A im Autoradio untergebracht, und ein zweiter Modul B an einer anderen, unzugänglichen Stelle im Automobil. Der Modul A fragt nach festgelegten Zeitabständen in Modul B nach dem Sicherungscode, welcher im Modul A mit einem gespeicherten Referenzcode verglichen wird. Stimmen beide überein, so bleibt das Radio bis zur nächsten Abfrage betriebsbereit. Stimmt der Code nicht, wird das Radio gesperrt. Auf diese Weise ist es für einen Dieb sinnlos nur das Radio zu stehlen, da es ohne das unzugängliche Modul B nicht funktioniert.

Aus der DE-41 23 666 A1 ist ein Sicherheitssystem für einen mobilen, diebstahlanfälligen Ausrüstungsgegenstand, wie ein Fahrzeug, bekannt. Hierbei erfolgt ein Codevergleich zwischen einem in einem Zündschlüssel gespeicherten Code und einem in einer CPU gespeicherten Code, um zu entscheiden, ob bestimmte Einrichtungen, die für den Betrieb des Fahrzeugs wichtig sind, freigegeben werden.

Aus der Internationalen Patentanmeldung Veröffentlichungsnummer WO 00/19580 ist Solarmodulsystem mit einem Vorausbezahlungsmechanismus bekannt. Eine Steuereinheit außerhalb eines Solarmoduls prüft die Vorausbezahlung der Energieabnahme, und sendet gegebenenfalls ein Kommando zu einer Steuereinheit des Solarmoduls, worauf die Energieabgabe aus dem Solarmodul unterbrochen wird.

Aus der Internationalen Patentanmeldung Veröffentlichungsnummer WO 97/42664 ist ein Solarmodul mit integriertem Schalter bekannt, durch welchen Schalter die Energieabgabe vom Solarmodul unterbrochen werden kann. Dieser Schalter wird über eine Steuerleitung oder über Radiowellen von einem Steuerschaltkreis gesteuert, der außerhalb des Solarmoduls angeordnet ist.

Der vorliegenden Erfindung liegt das technische Problem zugrunde, einen Schutz gegen eine unbefugte Nutzung eines Solarmoduls zu schaffen, der einfach und kostengünstig ausgebildet ist, und dabei dennoch einen sicheren Schutz vor einer unbefugten Nutzung oder einem Diebstahl bietet.

Diese Aufgabe wird gemäß der vorliegenden Erfindung durch ein Schutzsystem nach Anspruch 1, ein Verfahren nach Anspruch 5, eine Unterbrechungseinrichtung nach Anspruch 8 und eine Freigabeeinrichtung nach Anspruch 13 gelöst.

Bevorzugte Ausgestaltungen werden in den abhängigen Ansprüchen beschrieben.

Das erfindungsgemäße Schutzsystem stoppt in vorteilhafter Art und Weise die Energieabgabe, wenn die solarmodulseitige Unterbrechungseinrichtung innerhalb einer ersten vorbestimmten Zeit nach Aussendung eines ersten Signals zu der verbraucherseitigen Freigabeeinrichtung über die Energieleitung kein zweites Signal über die Energieleitung empfängt. Wenn nun ein unbefugter Nutzer, der das Solarmodul unbefugt anzapfen möchte oder gestohlen hat, einen Verbraucher an das Solarmodul anschließt, sendet die solarmodulseitige Unterbrechungseinrichtung das erste Signal und unterbricht eine Energieabgabe, wenn sie das zweite Signal innerhalb der ersten vorbestimmten Zeit nicht empfängt. Somit ist das Solarmodul nur durch einen befugten Nutzer in Kenntnis des zweiten Signals nutzbar und für einen unbefugten Nutzer, der das zweite Signal nicht kennt, wertlos.

Die Erfindung ermöglicht einen einfachen Aufbau des Schutzsystems, da außer der ohnehin erforderlichen Energieleitung keine Verbindung zwischen dem Solarmodul und dem Verbraucher erforderlich ist.

In einer vorteilhaften Ausgestaltung des erfindungsgemäßen Schutzsystems enthalten das erste und das zweite Signal jeweils zumindest einen durch Unterbrechung der Energieübertragung über die Energieleitung erzeugten Puls.

In einer weiteren vorteilhaften Ausgestaltung des erfindungsgemäßen Schutzsystems umfassen die solarmodulseitige Unterbrechungseinrichtung und die verbraucherseitige Freigabeeinrichtung jeweils eine Schalteinrichtung zum Kurzschließen der Energieleitung, um die Energieübertragung zu unterbrechen bzw. die oben erwähnten Signale zu erzeugen.

Dies erlaubt in vorteilhafter Art und Weise eine einfache Ausgestaltung des Schutzsystems bei Verwendung des Solarmoduls mit einer Batterieladeeinrichtung mit einem Laderegler als Verbraucher, der nach dem Shunt-Prinzip arbeitet, da in diesen Ladereglern schon eine Kurzschlußschalteinrichtung vorgesehen ist, die auch von dem Schutzsystem genutzt werden kann. Dadurch kann der Schaltungsaufbau erheblich vereinfacht werden.

Das erfindungsgemäße Verfahren ermöglicht in vorteilhafter Art und Weise einen integrierten Schutz gegen eine unerlaubte Nutzung des Solarmoduls, da keine Energieübertragung ohne Kenntnis eines Berechtigungskodes bzw. des zweiten Signals möglich ist.

Die erfindungsgemäße Unterbrechungseinrichtung stellt in vorteilhafter Art und Weise eine einfache und kostengünstig herzustellende Sicherung gegen eine unerlaubte Nutzung oder einen Diebstahl des Solarmoduls zur Verfügung.

In einer bevorzugten Ausführungsform ist die Unterbrechungseinrichtung integral mit dem Solarmodul ausgebildet.

Diese Anordnung gewährleistet in vorteilhafter Art und Weise, daß die erfindungsgemäße Unterbrechungseinrichtung nicht durch eine einfache Manipulation außer Betrieb gesetzt wird. Die Unterbrechungseinrichtung kann beispielsweise als Flachbaugruppe zwischen den Plus- und Minusleitern im Laminat des Solarmoduls oder in oder unter der Anschlußdose beim unmittelbaren Austritt der Leiter aus dem Laminat angeordnet werden.

Die erfindungsgemäße Freigabeeinrichtung weist in vorteilhafter Art und Weise einen einfachen Aufbau auf, wodurch sie kostengünstig hergestellt werden kann.

Im folgenden werden Ausführungen der vorliegenden Erfindung unter Bezugnahme auf die begleitenden Figuren beschrieben.
- Fig. 1: zeigt eine Ausführungsform des erfindungsgemäßen Schutzsystems umfassend eine solarmodulseitige Unterbrechungseinrichtung und eine verbraucherseitige Freigabeeinrichtung, wobei als Verbraucher ein Laderegler mit einer Batterie und einer Last dargestellt ist;
- Fig. 2: zeigt ein Solarmodul mit zwei Solarzellenarrays mit einer Ausführungsform der erfindungsgemäßen solarmodulseitigen Unterbrechungseinrichtung;
- Fig. 3: zeigt einen Schaltungsaufbau der solarmodulseitigen Unterbrechungseinrichtung von Figur 2;
- Fig. 4: zeigt den verbraucherseitigen Teil des erfindungsgemäßen Schutzsystems für ein Solarmodul mit einer verbraucherseitigen Freigabeeinrichtung, wobei als Verbraucher ein Lastwiderstand gezeigt ist;
- Fig. 5: zeigt eine weitere Ausführungsform des solarmodulseitigen Teils des erfindungsgemäßen Schutzsystems mit einer solarmodulseitigen Unterbrechungseinrichtung;
- Fig. 6: zeigt eine weitere Ausführungsform des verbraucherseitigen Teils des Schutzsystems für ein Solarmodul mit einer verbraucherseitigen Freigabeeinrichtung, wobei als Verbraucher ein Laderegler gezeigt ist,
- Fig. 7a: zeigt ein Diagramm, das einen Spannungsverlauf über die Zeit in dem mit Verweis auf die Figuren 5 und 6 beschriebenen Schutzsystem bei einer Energieabgabe an einen berechtigten Verbraucher darstellt; und
- Fig. 7b: zeigt ein Diagramm, das einen Spannungsverlauf über die Zeit in dem mit Verweis auf die Figuren 5 und 6 beschriebenen Schutzsystem bei einem nicht vorhandenen Verbraucher oder einem nicht berechtigten Verbraucher darstellt.

In der folgenden Beschreibung der Figuren werden gleiche oder sich entsprechende Bauelemente in verschiedenen Figuren mit den gleichen Bezugsziffern bezeichnet, so daß auf eine wiederholte Beschreibung dieser Bauelemente verzichtet werden kann.

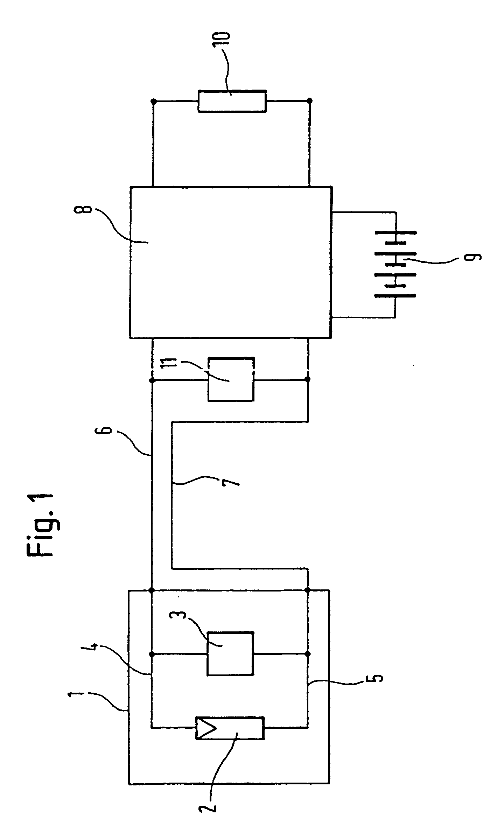

Fig. 1 zeigt den schematischen Aufbau einer Ausführungsform des Schutzsystems für ein Solarmodul gemäß der vorliegenden Erfindung. Die Bezugsziffer 1 in Fig. 1 bezeichnet ein Solarmodul mit einem Solarzellenarray 2 und einer solarmodulseitigen Unterbrechungseinrichtung 3. Das Solarzellenarray 2 umfaßt eine oder mehrere Solarzellen die miteinander verschaltet sind um eine bestimmte Ausgangsspannung bzw. einen bestimmten Ausgangsstrom zu erzeugen. Die solarmodulseitige Unterbrechungseinrichtung 3 ist parallel zu dem Solarzellenarray 2 zwischen die Ausgangsleitungen 4 und 5 des Solarzellenarrays 2 geschaltet. Die Ausgangsleitungen 4 und 5 sind mit Energieübertragungsleitungen 6 und 7 verbunden über die eine Energie zu einer Verbraucherseite übertragen werden kann. Auf der Verbraucherseite ist als Verbraucher ein Laderegler 8 dargestellt, an den eine Batterie 9 und ein Lastwiderstand 10 angeschlossen sind. Eine verbraucherseitige Freigabeeinrichtung 11 ist zwischen die Eingänge des Ladereglers 8 geschaltet, d.h. in anderen Worten zwischen die Energieübertragungsleitungen 6 und 7.

Im folgenden wird der Betrieb des in Fig. 1 dargestellten Schutzsystems beschrieben. Wenn das Solarzellenarray 2 z.B. nachts keine Energie erzeugt, liegt an den Eingängen der solarmodulseitigen Unterbrechungseinrichtung 3 keine Spannung an. Die solarmodulseitige Unterbrechungseinrichtung 3 hat in diesem Zustand keine Energieversorgung und ist außer Betrieb.

Nun wird der Fall betrachtet, daß das Solarzellenarray 2 Energie erzeugt. Dann wird die solarmodulseitige Unterbrechungseinrichtung 3 durch die Ausgangsleitungen 4 und 5 des Solarzellenarrays 2 mit einer Spannung versorgt und sendet ein erstes Signal bzw. einen ersten Code zu der verbraucherseitigen Freigabeeinrichtung. Wie in Fig. 1 dargestellt, kann dies über die mit den Bezugsziffern 6 und 7 bezeichneten Energieübertragungsleitungen erfolgen. In bevorzugter Art und Weise wird das erste Signal durch Unterbrechung der Energieübertragung über die Energieübertragungsleitungen 6 und 7 erzeugt, d.h. durch einen oder mehrere Pulse. Der durch das Signal dargestellte Code kann durch die Form, Länge oder Anzahl der Pulse wiedergegeben werden.

Die verbraucherseitige Freigabeeinrichtung 11 erfaßt oder empfängt das erste Signal und sendet ein zweites Signal zu der solarmodulseitigen Unterbrechungseinrichtung 3. Wie in Fig. 1 dargestellt, kann dies über die Energieübertragungsleitungen 6 und 7 erfolgen. Es sind jedoch auch andere Übertragungswege denkbar, beispielsweise über eine getrennte Leitung oder per Funk. Das von der verbraucherseitigen Freigabeeinrichtung 11 gesendete zweite Signal kann ebenso wie das erste Signal durch Unterbrechung der Energieübertragung von dem Solarzellenarray 2 über die Energieübertragungsleitungen 6 und 7 zu dem Verbraucher 8, 9 und 10 erzeugt werden,. d.h. durch einen oder mehrere Pulse.

Man beachte, daß der erste und der zweite Code auf jede gewünschte oder geeignete Weise gebildet sein können. Es kann sich im einfachsten Fall um zwei fest vorgegebene Signale handeln, welche beispielsweise durch einfache Schaltungselemente bestimmt werden (Kondensatoren, Induktivitäten, usw.), aber auch um mit Hilfe von Mikroprozessoren und Verschlüsselungsverfahren gewonnene Signale. Ebenso ist es möglich die Signale von ferne per Funk oder eine Steuerleitung zu ändern.

Die solarmodulseitige Unterbrechungseinrichtung 3 ist dergestalt ausgestaltet, daß, wenn sie innerhalb eines vorbestimmten Zeitraumes keine entsprechende Antwort auf das gesendete erste Signal von der verbraucherseitigen Freigabeeinrichtung 11 empfängt, d.h., wenn sie kein zweites Signal von der verbraucherseitigen Freigabeeinrichtung empfängt, eine Energieübertragung der mittels des Solarzellenarrays 2 erzeugten Energie zu dem Verbraucher 8, 9 und 10 über die Energieübertragungsleitungen 6 und 7 unterbricht. Dieser Fall kann auftreten, wenn beispielsweise kein Verbraucher und auch keine verbraucherseitige Freigabeeinrichtung 11 an das Solarmodul angeschlossen sind oder der Verbraucher 8, 9 und 10 keine verbraucherseitige Freigabeeinrichtung 11 aufweist.

Der erste angesprochene Fall ist unproblematisch, da dies ein Zustand ist, in dem das Solarmodul in einem Leerlauf ist. In dem zweiten Fall, d.h. in dem Fall, in dem ein Verbraucher 8, 9 und 10 ohne einer verbraucherseitigen Freigabeeinrichtung 11 versucht, das Solarmodul 1 zu nutzen, wird sofort nach Ablauf der ersten vorbestimmten Zeitdauer, nachdem die solarmodulseitige Sicherungsschaltung 3 das erste Signal ausgesendet hat, eine Energieübertragung über die Übertragungsleitungen 6 und 7 zu dem Verbraucher 8, 9 und 10 unterbrochen.

Somit kann auf wirksame Art und Weise verhindert werden, daß das Solarmodul 1 unerlaubt genutzt wird.

Wie in Fig. 1 gezeigt, ist die solarmodulseitige Unterbrechungseinrichtung 3 in dem Solarmodul 1 untergebracht und vorzugsweise integral mit dem Solarmodul 1 ausgebildet. Hierzu kann die solarmodulseitige Unterbrechungseinrichtung 3 beispielsweise als Flachbaugruppe ausgebildet werden, die zwischen den Ausgangsleitungen 5 und 6 des Solarzellenarrays bzw. der Anordnung von verschalteten Solarzellen angeschlossen ist und im Laminat des Solarmoduls 1 untergebracht ist. Ebenso kann die solarmodulseitige Unterbrechungseinrichtung 3 in einer oder unter einer Anschlußdose unmittelbar an einem Ort angeordnet werden, an dem die Ausgangsleitungen 4 und 5 des Solarzellenarrays 2 aus dem Laminat des Solarmoduls austreten. In anderen Worten, es wird bevorzugt, daß die Unterbrechungseinrichtung 3 so mit dem Solarmodul 1 verbunden ist, daß eine Entfernung der Unterbrechungseinrichtung 3 das Solarmodul 1 unbrauchbar macht, beispielsweise indem eine Entfernung der Unterbrechungseinrichtung notwendigerweise zu einem Bruch der Stromleitungen innerhalb des Moduls führt.

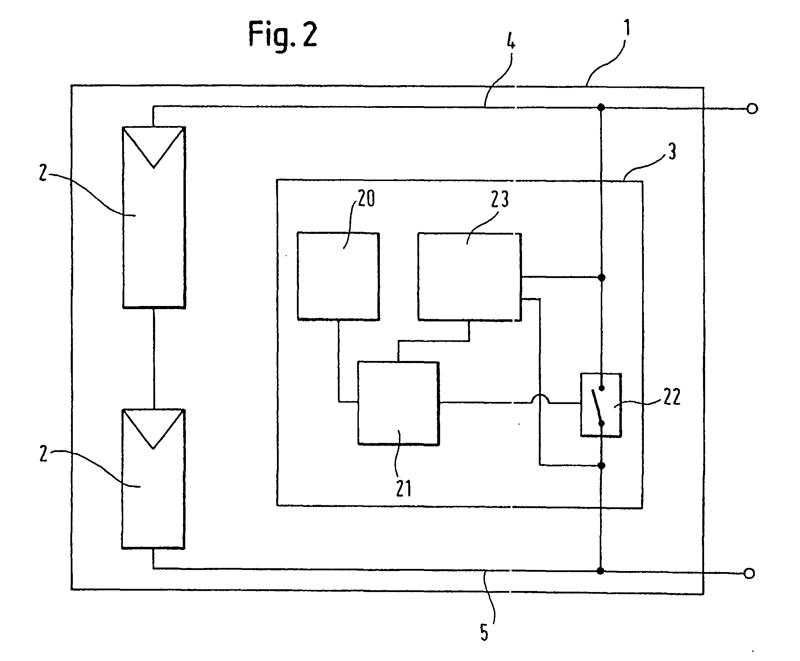

Nun wird im folgenden mit Verweis auf Figur 2 ein solarmodulseitiger Teil des erfindungsgemäßen Schutzsystems beschrieben.

Wie in Fig. 2 dargestellt, ist es möglich, eine solarmodulseitige Unterbrechungseinrichtung 3 für eine Vielzahl von Solarzellenarrays 2 vorzusehen. In der Figur 2 sind zwei in Reihe geschaltete Solarzellenarrays 2 dargestellt.

Die in Fig. 2 gezeigte solarmodulseitige Unterbrechungseinrichtung 3 umfaßt eine Sendeeinrichtung 20 zum Senden eines ersten Signals. Die Sendeeinrichtung 20 ist mit einer Ansteuereinrichtung 21 zum Ansteuern einer Schalteinrichtung 22, die durch einen symbolischen Schalter dargestellt ist, vorgesehen. Die Schalteinrichtung ist zwischen die Ausgangsleitungen 4 und 5 der Solarzellenarrays 2 geschaltet. Wenn die Schalteinrichtung 22 geschlossen ist, sind die Ausgangsleitungen 4 und 5 der Solarzellenarrays 2 und damit die Ausgänge des Solarmoduls 1 kurzgeschlossen.

Darüber hinaus umfaßt die in Fig. 2 gezeigte solarmodulseitige Unterbrechungseinrichtung 3 eine Empfangseinrichtung 23, die zum Empfang des zweiten Signals, das von einer in Fig. 2 nicht dargestellten verbraucherseitigen Freigabeeinrichtung 11 über die Energieübertragungsleitungen 6 und 7, die mit den Ausgängen des Solarmoduls 1 verbunden sind, übertragen wird.

Nun wird ein Betrieb des in Fig. 2 gezeigten solarmodulseitigen Teils des erfindungsgemäßen Schutzsystems beschrieben.

Wenn die Solarzellenarrays 2 keine Spannung erzeugen, hat die solarmodulseitige Unterbrechungseinrichtung 3 keine Energieversorgung und ist somit außer Betrieb. Wenn die Solarmodule 2 eine Spannung erzeugen, sendet die Sendeeinrichtung 20 ein erstes Signal. Dies wird gesendet, indem die Sendeeinrichtung 20 ein entsprechendes Signal an die Ansteuereinrichtung 21 ausgibt und die die Schalteinrichtung 22 dergestalt ansteuert, daß eine dem ersten Signal entsprechende Impulsfolge erzeugt wird. Diese Impulsfolge besteht zumindest aus einem, in bevorzugter Weise aber aus mehreren aufeinanderfolgenden Kurzschlußimpulsen auf der Energieleitung. Diese werden, wie zuvor angesprochen, durch Schließen und Öffnen der Schalteinrichtung 22 erzeugt. Auf diese Art und Weise können mit dem ersten Signal verschiedenste Informationen übertragen werden, indem die Informationen beispielsweise mittels Folgen von Kurzschlußimpulsen und Pausen (PPM Modulation) übermittelt werden. Wenn das erste Signal auf diese Art und Weise gesendet werden ist, geht die solarmodulseitige Unterbrechungseinrichtung oder Sicherungsschaltung 3 für eine erste vorbestimmte Zeitdauer in einen Wartezustand. Wenn die Empfangseinrichtung 23 zum Empfangen eines zweiten Signals ein zweites Signal innerhalb der ersten vorbestimmten Zeitdauer empfängt, ist ein berechtigter Verbraucher, d.h. ein Verbraucher mit einer verbraucherseitigen Freigabeeinrichtung 11, mit dem Solarmodul 1 verbunden. Somit wird eine Energieabgabe nicht unterbrochen.

Wenn die Empfangseinrichtung 23 zum Empfangen eines zweiten Signals innerhalb der ersten vorbestimmten Zeitdauer das zweite Signal nicht empfängt, gibt die Empfangseinrichtung 23 ein entsprechendes Signal an die Ansteuereinrichtung 21 aus, so daß die Ansteuereinrichtung 21 die Schalteinrichtung 22 dergestalt ansteuert, daß die Energieabgabe unterbrochen wird. Hierzu werden die Ausgangsleitungen 4 und 5 der Solarmodule 2 kurzgeschlossen.

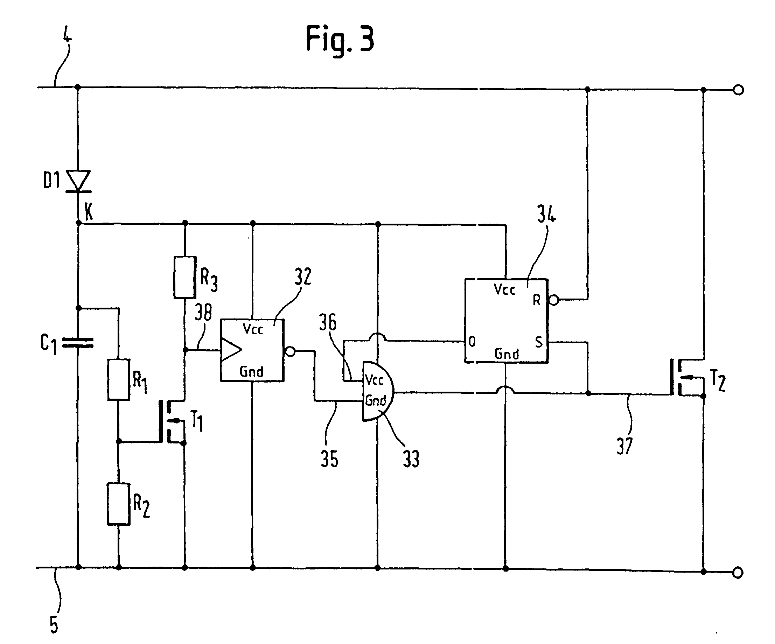

Im folgenden wird mit Verweis auf Figur 3 ein Schaltungsdiagramm einer bevorzugten solarmodulseitigen Unterbrechungseinrichtung oder Schutzeinrichtung 3 beschrieben. Die in Figur 3 gezeigte Unterbrechungseinrichtung ist zwischen die Ausgangsleitungen 4 und 5 des Solarzellenarrays 2 geschaltet.

In Fig. 3 sind eine Diode D1 und ein Kondensator C1, der als Energiespeicher dient, in Reihe verbunden und zwischen die Ausgangsleitungen 4 und 5 der Solarmodule 2 geschaltet. Ein Knoten K, der aus der Verbindung der Diode D1 mit dem Kondensator C1 gebildet wird, ist mit den Stromversorgungseingängen Vcc eines Monoflops 32, eines UND-Gatters 33 und eines Speichergliedes 34, das im folgenden auch als RS Flip-Flop bezeichnet wird, verbunden. Ein Gate eines ersten Transistors T₁ ist über einen Widerstand R₁ mit dem Knoten K verbunden und über einen Widerstand R₂ mit der Ausgangsleitung 5. Das Drain des Transistors T₁ ist mit einem Eingang des Monoflops 32 verbunden, der wiederum über einen Widerstand R₃ mit dem Knoten K verbunden ist. Die Source des Transistors T₁ ist mit der Ausgangsleitung 5 verbunden. Die Masseanschlüsse Gnd des Monoflops 32, des UND-Gatters 33 und des RS Flip-Flops sind jeweils mit der Ausgangsleitung 5 verbunden. Der invertierte Ausgang des Monoflops 32 ist mit einem Eingang 35 des UND-Gatters 33 verbunden. Ein Q-Ausgang des RS Flip-Flops ist mit einem anderen Eingang 36 des UND-Gatters verbunden. Ein Ausgang 37 des UND-Gatters 33 ist mit einem Setzeingang S des RS Flip-Flops 34 und einem Gate eines Transistors T₂ verbunden, der zwischen die Ausgangsleitungen 4 und 5 geschaltet ist. Ein Rücksetzeingang R des RS Flip-Flops ist mit der Ausgangsleitung 4 verbunden. Für diese Schaltung wird angenommen, daß die Ausgangsleitung 4 die positive Ausgangsleitung des Solarzellenarrays oder der Solarzellenarrays 2 ist.

Nun wird ein Betrieb der oben beschriebenen Schaltung einer Ausführung der Unterbrechungseinrichtung beschrieben.

Es wird angenommen, daß der Ausgang Q des RS Flip-Flops in einem Anfangszustand HIGH ist. Wenn ein an die Leitungen 4 und 5 angeschlossenes Solarzellenarray eine Spannung erzeugt, lädt sich der Kondensator C₁ über die Diode D1 auf. Sobald das Potential an den Knoten K für eine Energieversorgung der Bauelemente ausreichend ist, wird der Transistor T₂ eingeschaltet, da der invertierte Ausgang des Monoflops 32 HIGH ist und somit ein HIGH-Signal an dem Eingang 35 des UND-Gatters 33 anliegt und ein weiteres HIGH-Signal an dem zweiten Eingang 36 des UND-Gatters 33 anliegt, da der Ausgang Q des RS Flip-Flops HIGH ist. Damit wird ein Kurzschlußimpuls auf den Leitungen 4 und 5 bewirkt, die wie oben ausführlich beschrieben worden ist, mit Energieübertragungsleitungen 6 und 7 verbindbar sind.

Die Länge dieses ersten Kurzschlußimpulses, der dem ersten Signal entspricht, wird mittels des Verhältnisses von R₁/R₂ bestimmt.

Bei einem gewissen Wert der Spannung über den Kondensator C₁, der mittels des Verhältnisses von R₁/R₂ bestimmt wird, sperrt der Transistor T₁, wodurch an den Eingang 38 des Monoflops 32 ein HIGH-Potential angelegt wird bzw. eine positive Flanke.

Bei dieser positiven Flanke gibt das Monoflop 32 einen LOW-Impuls mit einer vorbestimmten Dauer an den Eingang 35 des UND-Gatters 33 aus. Daraufhin gibt das UND-Gatter 33 an seinem Ausgang 37 ein LOW-Signal aus.

Damit wird der Transistor T₂ während der Zeitdauer des LOW-Impulses des Monoflops 32 ausgeschaltet.

Da der Setzeingang S des RS Flip-Flops 34 mit dem Ausgang 37 des UND-Gatters 33 verbunden ist, liegt nun an dem Setzeingang S des RS Flip-Flops 34 ebenfalls ein LOW-Signal an.

Wenn kein Antwort-Kurzschlußimpuls von einer verbraucherseitigen Schutzschaltung oder Freigabeschaltung 11 während der Zeitdauer, während der der Transistor T₂ ausgeschaltet ist, d.h. während der Zeitdauer des LOW-Impulses des Monoflops 32, auf den Leitungen 4 und 5 empfangen wird, schaltet der Transistor T₂ am Ende des LOW-Impulses wieder ein und schließt somit die Leitungen 4 und 5 kurz.

Da die Leitungen 4 und 5 kurzgeschlossen sind, entlädt sich der Kondensator C₁. Wenn die Spannung über dem Kondensator C₁ auf einen bestimmten Wert absinkt, wird der Transistor T₁ ausgeschaltet und das Drain des Transistors T₁ geht auf LOW, wodurch an dem Eingang 38 des Monoflops 32 ein LOW-Signal anliegt.

Wenn das Potential am Knoten K einen Wert unterschreitet, der die Energieversorgung der Bauelemente sicherstellt, wird der Transistor T₂ ausgeschaltet. Somit wird, wenn sich der Kondensator C₁ bis zu einem gewissen Wert entlädt, oder in anderen Worten der Energiespeicher C₁ "leer" ist, der Transistor T₂, der in bevorzugter Art und Weise ein Leistungstransistor ist, ausgeschaltet und somit ein Kurzschluß auf den Leitungen 4 und 5 aufgehoben. Damit ist die gesamte Schaltung wieder im Grundzustand und der Betrieb beginnt von vorne.

Wenn nun eine verbraucherseitige Schutzschaltung oder Freigabeschaltung 11 innerhalb der Zeitdauer während der der Ausgang des Monoflops 32 LOW ist und während der der Transistor T₂ ausgeschaltet ist, einen Antwort-Kurzschlußimpuls, der einem zweiten Signal entspricht, über die Energieübertragungsleitungen 6 und 7, die mit den o Leitungen 4 und 5 verbunden sind, sendet, liegt an dem Rücksetzeingang R des RS Flip-Flops 34 ein LOW-Impuls an, wodurch das RS Flip-Flop 34 zurückgesetzt wird. Damit geht der Q-Ausgang des RS Flip-Flops 34 auf LOW und der Transistor T₂ wird nach dem LOW-Impuls des Monoflops 33 nicht wieder eingeschaltet. Damit wird eine Energieübertragung gewährleistet, wenn eine verbraucherseitige Freigabeschaltung 11 ein geeignetes zweites Signal in Form eines Kurzschlußimpulses zu der solarmodulseitigen Unterbrechungseinrichtung oder Schutzschaltung 3 sendet.

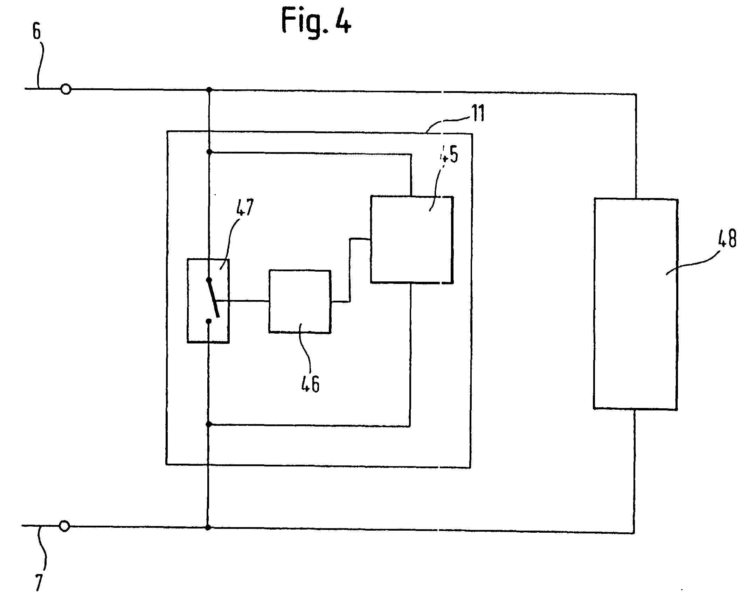

Figur 4 zeigt eine Ausführungsform des verbraucherseitigen Teils des erfindungsgemäßen Schutzsystems. Wie in Figur 4 gezeigt, ist eine verbraucherseitige Freigabeeinrichtung 11 zwischen die Energieversorgungsleitungen 6 und 7 geschaltet, die - wie in Figur 1 gezeigt - zu dem Solarmodul 1 führen. Als Last ist in Figur 4 ein Lastwiderstand 48 dargestellt. Die verbraucherseitige Freigabeeinrichtung 11 umfaßt eine verbraucherseitige Empfangseinrichtung 45, die zum Empfang eines ersten Signals bzw. Codes von dem Solarmodul, das auf den Energieübertragungsleitungen 6 und 7 übertragen wird, geeignet ist. Die verbraucherseitige Empfangseinrichtung 45 ist mit einer verbraucherseitigen Sendeeinrichtung 46 verbunden, die wiederum mit einer verbraucherseitigen Schalteinrichtung 47 verbunden ist, um diese zu öffnen oder zu schließen. Die verbraucherseitige Schalteinrichtung 47 ist zwischen die Energieübertragungsleitungen 6 und 7 geschaltet.

Im folgenden wird ein Betrieb des in Figur 4 gezeigten verbraucherseitigen Teils des erfindungsgemäßen Schutzsystems beschrieben.

Wenn der in Figur 4 gezeigte verbraucherseitige Teil des erfindungsgemäßen Schutzsystems nicht mit einem Solarmodul verbunden ist oder mit einem Solarmodul verbunden ist, das keine Energie erzeugt, ist die verbraucherseitige Freigabeeinrichtung 11 in Ruhe.

Wenn auf den Energieübertragungsleitungen 6 und 7 eine Spannung anliegt, wird die verbraucherseitige Freigabeeinrichtung 11 mit Betriebsenergie versorgt. Wie zuvor beschrieben worden ist, sendet die solarmodulseitige Unterbrechungseinrichtung 3 ein erstes Signal, das z.B. aus Kurzschlußimpulsen und Pausen besteht. Wenn die verbraucherseitige Empfangseinrichtung 45 dieses erste Signal bzw. ersten Code erfaßt, gibt sie ein entsprechendes Signal an die verbraucherseitige Sendeeinrichtung 46 aus um die Schalteinrichtung 47 dergestalt anzusteuern, daß z.B. mittels Kurzschlußimpulsen und Pausen ein zweites Signal als Antwort auf das erste Signal über die Energieübertragungsleitungen 6 und 7 zu dem Solarmodul übertragen wird.

Wenn angenommen wird, daß das zweite Signal ein einzelner Kurzschlußimpuls ist, kann die Freigabeeinrichtung 11 mittels eines Monoflops realisiert werden, das einen Transistor, der als Schalteinrichtung verwendet wird, ansteuert.

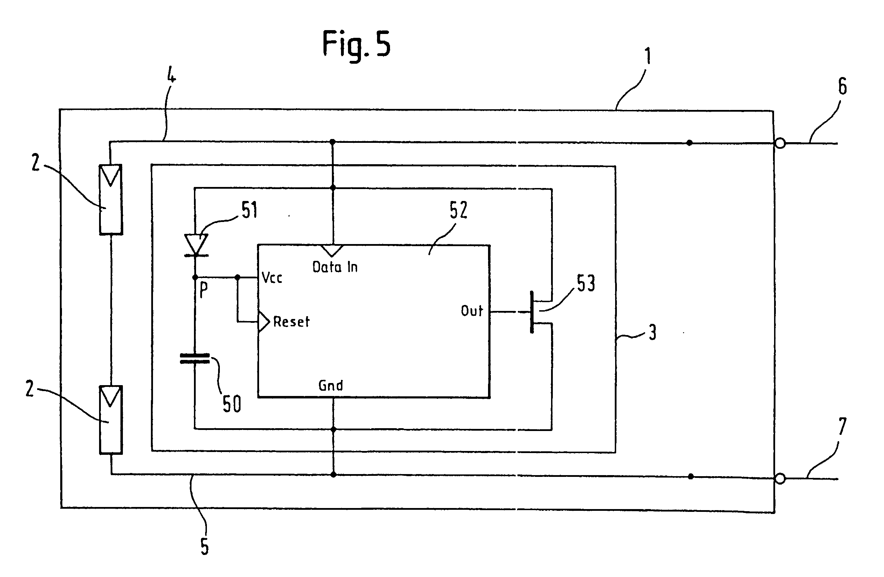

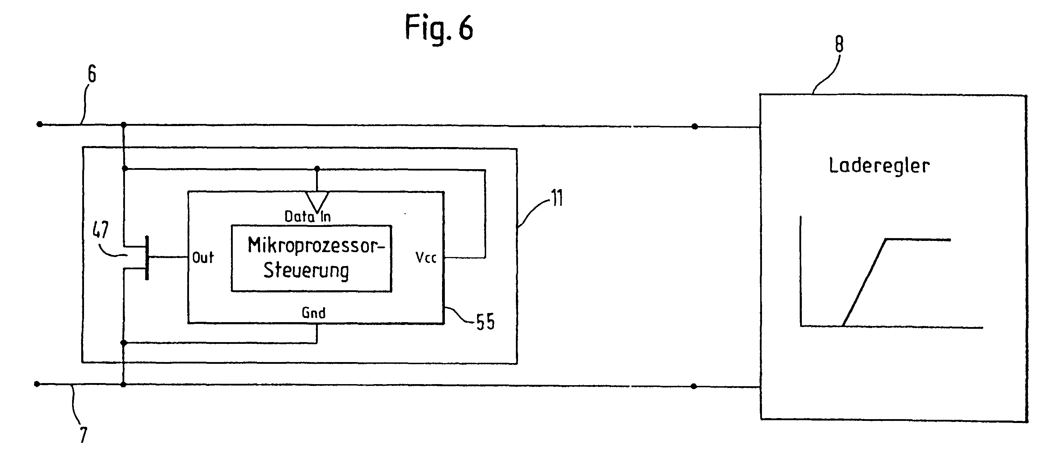

Im folgenden wird mit Verweis auf die Figuren 5 und 6 eine weitere Ausführungsform eines erfindungsgemäßen Schutzsystems beschrieben. Figur 5 zeigt den solarmodulseitigen Teil des Schutzsystems, und Figur 6 zeigt den verbraucherseitigen Teil.

Das in Figur 5 gezeigte Solarmodul 1 umfaßt mehrere Solarzellen 2, die in Reihe geschaltet sind. Die Ausgangsleitungen 4 und 5 der Solarmodule sind an den Ausgängen des Solarmoduls 1 mit den Energieübertragungsleitungen 6 und 7 verbunden. Die in der Figur 5 dargestellte solarmodulseitige Schutzschaltung oder Unterbrechungseinrichtung 3 umfaßt einen Energiespeicher 50, der hier als Kondensator realisiert ist, der in Reihe mit einer Diode 51 zwischen die Ausgangsleitungen 4 und 5 der Solarmodule 2 geschaltet ist. Der mittels der Verbindung zwischen dem Kondensator 50 mit der Diode 51 gebildete Knoten P ist mit einem Spannungsversorgungsanschluß Vcc einer Mikroprozessoreinrichtung 52 verbunden. Ein Dateneingang Data IN der Mikroprozessoreinrichtung 52 ist mit einer Ausgangsleitung 4 der Solarmodule 2 verbunden, und ein Masseanschluß GND der Mikroprozessoreinrichtung 52 ist mit der anderen Ausgangsleitung 5 der Solarzellenarrays 2 verbunden. Die Mikroprozessoreinrichtung 52 weist darüber hinaus einen Ausgangsanschluß Out auf, der mit einer Schalteinrichtung 53 verbunden ist, die zwischen die Ausgangsleitungen 4 und 5 des Solarzellenarrays 2 geschaltet ist.

Die Schalteinrichtung 53 ist in bevorzugter Art und Weise ein Leistungstransistor, dessen Gate mit dem Ausgangsanschluß Out der Mikroprozessoreinrichtung 52 verbunden ist.

Der in Figur 6 dargestellt verbraucherseitige Teil des erfindungsgemäßen Schutzsystems zeigt einen Laderegler 8, der an die Energieübertragungsleitungen 6 und 7 angeschlossen ist. Die in Figur 1 gezeigte Batterie und der Lastwiderstand 10 sind hier aus Gründen der Übersichtlichkeit weggelassen worden.

Die in der Figur 6 dargestellte verbraucherseitige Freigabeeinrichtung 11 umfaßt eine verbraucherseitige Schalteinrichtung 47, die zwischen Energieeingangsleitungen des Verbrauchers geschaltet ist. In der in Figur 6 gezeigten Anordnung sind die Energieeingänge des Verbrauchers die Energieübertragungsleitungen 6 und 7.

Die verbraucherseitige Schalteinrichtung 47 ist in bevorzugter Weise als ein Leistungstransistor ausgebildet, dessen Gate mit einem Ausgang Out einer verbraucherseitigen Mikroprozessoreinrichtung 55 verbunden ist. Ein Dateneingang Data IN der verbraucherseitigen Mikroprozessoreinrichtung 55 und ein Spannungsversorgungseingang Vcc der verbraucherseitigen Mikroprozessoreinrichtung sind mit einer Energieübertragungsleitung 6 verbunden, und ein Masseanschluß GND der verbraucherseitigen Mikroprozessoreinrichtung 55 ist mit der anderen Energieübertragungsleitung 7 verbunden.

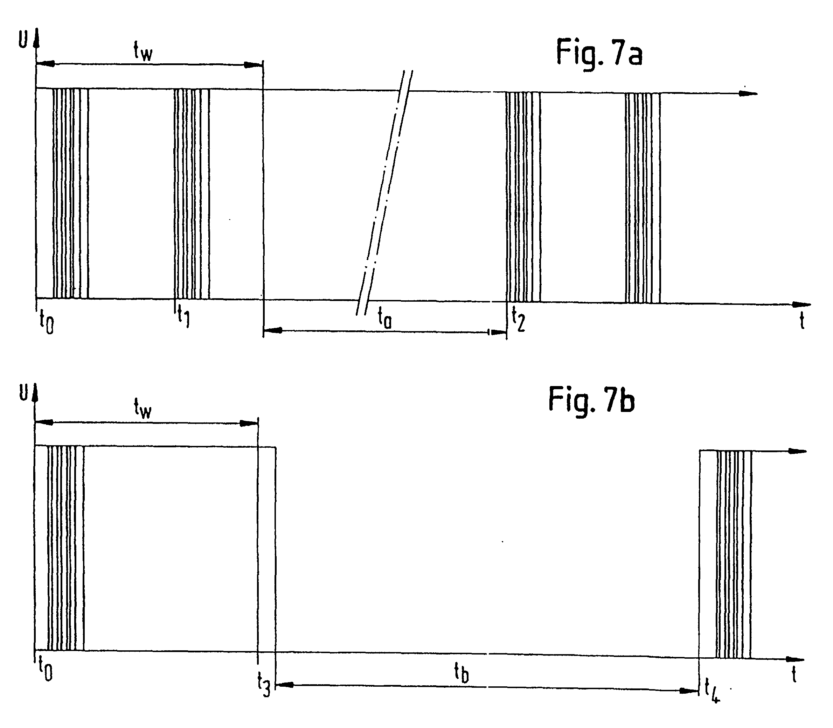

Ein Betrieb des in Figur 5 gezeigten solarmodulseitigen Teils des Schutzsystems mit der solarmodulseitigen Unterbrechungseinrichtung 3 und des in Figur 6 gezeigten verbraucherseitigen Teils mit der verbraucherseitigen Schutzeinrichtung oder Freigabeeinrichtung 11 wird nun mit Verweis auf die Figuren 7a und 7b beschrieben.

Die Figur 7a zeigt ein Diagramm, das einen Spannungsverlauf über die Zeit in dem mit Verweis auf die Figuren 5 und 6 beschriebenen Schutzsystem bei einer Energieabgabe an einen berechtigten Verbraucher darstellt.

Wenn die Solarzellenarrays 2 eine Spannung erzeugen, lädt sich der Kondensator 50 über die Diode 51 auf. Wenn das Potential der Verbindung zwischen der Diode 51 und dem Kondensator 50 einen vorbestimmten Wert überschreitet, der die Energieversorgung der solarmodulseitigen Mikroprozessoreinrichtung 52 sicherstellt, gibt die solarmodulseitige Mikroprozessoreinrichtung 52 ein Signal an dem Ausgang Out an die Schalteinrichtung 53 aus, um mittels Folgen von Kurzschlußimpulsen und Pausen zu dem Zeitpunkt t₀ ein erstes Signal über die Energieübertragungsleitungen 6 und 7 zu dem verbraucherseitigen Teil des Schutzsystems zu übertragen. In der Figur 7b ist diese Impulsfolge mittels einer Vielzahl von sehr kurzen Kurzschlussimpulsen dargestellt. Die Impulsfolgen können mittels kryptographischen Verfahren in der Mikroprozessoreinrichtung 53 verschlüsselt werden und außer dem ersten Signal auch Informationen betreffend zum Beispiel Kenndaten des Solarmoduls enthalten.

Da der Vcc-Eingang der solarmodulseitigen Mikroprozessoreinrichtung 52 mit dem Rücksetz-Eingang der solarmodulseitigen Mikroprozessoreinrichtung 52 verbunden ist, ist ein definierter Anfangszustand gewährleistet.

In der verbraucherseitigen Freigabeeinrichtung 11 erfaßt die verbraucherseitige Mikroprozessoreinrichtung 55 über einen Eingang Data In das über die Energieübertragungsleitungen 6 und 7 übertragene erste Signal. Als Antwort auf den Empfang dieses ersten Signals sendet die verbraucherseitige Freigabeeinrichtung 11 ein entsprechendes zweites Signal über die Übertragungsleitungen 6 und 7 zurück zu dem Solarmodul. Dies wird ausgeführt, indem die verbraucherseitige Mikroprozessoreinrichtung 55 die Schalteinrichtung 47 ansteuert, so daß diese eine dem zweiten Signal entsprechende Folge von Kurzschlußimpulsen und Pausen zu dem Zeitpunkt t₁ auf den Energieübertragungsleitungen 6 und 7 erzeugt.

Das zweite Signal kann ein für jeden Verbraucher festgelegtes Identifizierungssignal sein. Die verbraucherseitige Freigabeeinrichtung 11 kann darüber hinaus einen Chipkartenleser mit einem entsprechenden Steuerprozessor, eine Tastatur zur Nummerneingabe, zur Freigabe bestimmter Energiemengen, einen Funkempfänger, um die Freigabecodes ferngesteuert zu empfangen oder ähnliche Steuersysteme umfassen. Da mittels der ersten und zweiten Signale eine Vielzahl von Informationen zwischen dem solarmodulseitigen Teil und dem verbraucherseitigen Teil ausgetauscht werden können, ist es somit möglich, z.B. die Menge der übertragenen Energie zu begrenzen. Darüber hinaus ist es möglich, z.B. mittels des zuvor genannten Chipkartenlesers eine sofortige Abbuchung einer der aufgenommenen Energiemenge entsprechende Geldmenge von einer Chipkarte eines Benutzers auszuführen.

Die in der solarmodulseitigen Unterbrechungseinrichtung 3 angeordnete solarmodulseitige Mikroprozessoreinrichtung 52 erfaßt das über die Energieübertragungsleitungen 5 und 6 übertragene zweite Signal und steuert die Schalteinrichtung 53 entsprechend an, wenn das zweite Signal an einem Zeitpunkt t2 innerhalb der Zeitdauer t_{w} nach dem Senden des ersten Signals oder nach dem Einschalten der Einrichtung erfaßt wird.

Wenn das zweite Signal wie zuvor angedeutet beispielsweise einen Berechtigungscode des Verbrauchers umfaßt, überprüft die solarmodulseitige Mikroprozessoreinrichtung 52 ob der Verbraucher berechtigt ist. Wenn der Verbraucher berechtigt ist und der Berechtigungscode gültig ist, wird eine Energieübertragung zu der Verbraucherseite nicht unterbrochen. Für eine Überprüfung der Gültigkeit des Berechtigungscodes kann dieser beispielsweise in der solarmodulseitigen Mikroprozessoreinrichtung 52 mit Referenzcodes verglichen werden, die in einem Speicher (nicht dargestellt) in der solarmodulseitigen Mikroprozessoreinrichtung 52 abgelegt sind Wenn das zweite Signal beispielsweise eine Angabe betreffend eine Energiemenge die zu dem Verbraucher zu Übertragen ist umfaßt, wird während einer Zeitdauer tₐ, wie in Figur 7a gezeigt, eine entsprechende Energiemenge ausgegeben. Diese Energiemenge kann, wie oben angedeutet, z.B. verbraucherspezifisch festgelegt sein. Nach der Zeitdauer tₐ sendet die solarmodulseitige Unterbrechungseinrichtung 3 in dem Solarmodul wieder das erste Signal und wartet auf den Empfang des zweiten Signals.

Wenn nun, wie in Figur 7b dargestellt, die solarmodulseitige Unterbrechungseinrichtung 3 nach einem Senden des ersten Signals an dem Zeitpunkt t₀ innerhalb der vorbestimmten Zeitdauer t_{w} kein geeignetes Signal empfängt, d.h. entweder gar kein zweites Signal oder ein zweites Signal mit einem ungültigen Berechtigungscode, wird die Schalteinrichtung 53 dergestalt angesteuert, daß diese die Energieübertragung unterbricht oder, in anderen Worten, die Ausgangsleitungen 4 und 5 der Solarmodule 2 kurzschließt.

Dieser Kurzschluß wird für eine vorbestimmte Zeitdauer t_{b} aufrechterhalten. Diese Zeitdauer t_{b} entspricht der Zeitdauer, bis sich der Kondensator 50 soweit entladen hat, daß das Potential an dem Knoten P zwischen der Diode 51 und dem Kondensator 50 für die Energieversorgung der solarmodulseitigen Mikroprozessoreinrichtung 52 nicht mehr ausreicht. Dadurch wird während der Zeitdauer t_{b} die Energieübertragung mittels des Kurzschlusses der Ausgangsleitungen 4 und 5 der Solarmodule 2 durch die solarmodulseitige Schalteinrichtung 53 unterbrochen. Die Zeitdauer t_{b}, während der die Energieübertragung unterbrochen ist, wird durch die in dem Kondensator 50 gespeicherte Energie bestimmt.

Wenn das Potential an dem Knoten P zwischen der Diode 51 und dem Kondensator 50 unter einen gewissen Wert fällt, d.h. wenn sich der Kondensator 50 bis zu einem Wert entladen hat, bei dem das Potential zwischen der Diode 51 und dem Kondensator 50 die Versorgungsspannung, die für einen Betrieb der solarmodulseitigen Mikroprozessoreinrichtung 52 erforderlich ist, unterschreitet, wird die solarmodulseitige Mikroprozessoreinrichtung 52 ausgeschaltet, wodurch der Ausgang Out der solarmodulseitigen Mikroprozessoreinrichtung 52 auf einen Low-Pegel fällt und damit die solarmodulseitige Schalteinrichtung 53 wieder sperrt, d.h. der Kurzschluß zwischen den Leitungen 4 und 5 aufgehoben wird.

Somit kippt das System in den Anfangszustand zurück, und der Betrieb beginnt wieder von vorne, wie oben beschrieben worden ist.

Die vorliegende Erfindung ist besonders in einer Anordnung in der die Solarzellenarrays modular aufgebaut sind, vorteilhaft. Beispielsweise können einzelne Solarmodule als "stand alone" Module mit Sicherung ausgestaltet werden, die auch aneinandergereiht werden können. Eine Funktion der erfindungsgemäßen Sicherungseinrichtungen wird durch eine Parallelschaltung der einzelnen Solarmodule nicht beeinträchtigt. Darüber hinaus ist mittels des modularen Aufbaus eine einfache Integration in eine Anlage (Solarfarm) möglich.

Um eine geringe Größe der jeweiligen Schaltungen zu erzielen, werden diese in bevorzugter Art und Weise in Einchip-Bauweise (PIC-Microchip) ausgeführt. Darüber hinaus kann die vorliegende Erfindung mittels eines Smart-FET Aufbaus realisiert werden, wobei in vorteilhafter Weise in dem Leistungstransistor Platz für eine intelligente Steuerung ist.

## Patentansprüche

1. Schutzsystem für ein Solarmodul (1), umfassend eine solarmodulseitige Unterbrechungseinrichtung (3) und eine verbraucherseitige Freigabeeinrichtung (11), wobei die solarmodulseitige Unterbrechungseinrichtung (3) der verbraucherseitigen Freigabeeinrichtung (11) ein erstes Signal sendet und eine Energieübertragung der mittels des Solarmoduls erzeugten Energie zu dem Verbraucher über eine Energieleitung (6, 7) unterbricht wenn die solarmodulseitige Unterbrechungseinrichtung innerhalb einer ersten vorbestimmten Zeit (t_{w}) kein zweites Signal von der verbraucherseitigen Freigabeeinrichtung (11) empfängt, wobei das erste und das zweite Signal uber die Energieleitung (6, 7) übertragen werden, und wobei das erste Signal und das zweite Signal zumindest einen durch Unterbrechung der Energieübertragung des Solarmoduls (1) gebildeten Puls umfassen.

2. Schutzsystem nach Anspruch 1, **dadurch gekennzeichnet, daß** die solarmodulseitige Unterbrechungseinrichtung (3) und die verbraucherseitige Freigabeeinrichtung (11) jeweils eine Schalteinrichtung (22, T2, 53; 47) zum Kurzschließen der Energieleitung (6, 7) aufweisen, wobei das Kurzschließen der Energieleitung (6, 7) durch die Schalteinrichtung der Unterbrechungseinrichtung (3) der Erzeugung des ersten Signals dient oder der Unterbrechung der Energieübertragung.

3. Schutzsystem nach einem der vorhergehenden Ansprüche, **dadurch gekennzeichnet, daß** die solarmodulseitige Unterbrechungseinrichtung (3) einen Energiespeicher (C1, 50) umfaßt, und eine Energieabgabe des Solarmoduls (1) mittels der Schalteinrichtung (22, T2, 53) der solarmodulseitigen Unterbrechungseinrichtung (3) solange unterbrochen ist bis der Energiespeicher (C1, 50) leer ist.

4. Schutzsystem nach einem der vorhergehenden Ansprüche, **dadurch gekennzeichnet, daß** die solarmodulseitige Unterbrechungseinrichtung (3) integral mit dem Solarmodul (1) ausgebildet ist.

5. Verfahren zur Energieübertragung von einem Solarmodul (1) zu einem Verbraucher (8, 9, 10; 48), umfassend die folgenden Schritte:
- Senden eines ersten Signals zu dem Verbraucher (8, 9, 10; 48),
- Senden eines zweiten Signals zu dem Solarmodul (1) in Antwort auf das erste Signal, wobei das zweite Signal ein Berechtigungscode des Verbrauchers ist;
- Überprüfen des zweiten Signals, um zu entscheiden, ob der Verbraucher (8, 9, 10; 48) zu einer Energieentnahme aus dem Solarmodul (1) berechtigt ist;
- Freigeben der Energieübertragung wenn das zweite Signal innerhalb einer ersten vorbestimmten Zeit (t_{w}) empfangen wird und wenn der Verbraucher (8, 9, 10; 48) zur Energieentnahme berechtigt ist;
- Unterbrechen der Energieübertragung wenn das zweite Signal nicht innerhalb der ersten vorbestimmten Zeit (t_{w}) empfangen wird oder der Verbraucher (8, 9, 10; 48) nicht zur Energieentnahme berechtigt ist, wobei das erste und das zweite Signal durch eine gepulste Unterbrechung der Energieübertragung zwischen dem Solarmodul (1) und dem Verbraucher (8, 9, 10; 48) gebildet werden.

6. Verfahren nach Anspruch 5, **dadurch gekennzeichnet, daß** die Energieübertragung und/oder Signalbildung mittels Kurzschließen einer Energieübertragungsleitung (6, 7) zwischen dem Solarmodul (1) und dem Verbraucher (8, 9, 10; 48) unterbrochen wird.

7. Verfahren nach einem der Ansprüche 5 oder 6, **dadurch gekennzeichnet, daß**, wenn das zweite Signal nicht innerhalb der ersten vorbestimmten Zeit (t_{w}) empfangen wird oder der Verbraucher (8, 9, 10; 48) nicht zur Energieentnahme berechtigt ist, die Energieübertragung während einer zweiten vorbestimmten Zeit (t_{b}) unterbrochen wird.

8. Unterbrechungseinrichtung (3) zur Unterbrechung einer Energieabgabe eines Solarmoduls (1), die an einem Energieausgang eines Solarmoduls (1) angeordnet ist, umfassend:
- eine Sendeeinrichtung (20, 52) zum Senden eines ersten Signals über eine Energieleitung;
- eine Empfangseinrichtung (23, 52) zum Empfangen eines zweiten Signals über die Energieleitung;
- eine Schalteinrichtung (22, 53) zum Unterbrechen der Energieabgabe des Solarmoduls (1); und
- eine Ansteuereinrichtung (21, 52) zum Ansteuern der Schalteinrichtung (22, 53) dergestalt, daß wenn die Empfangseinrichtung (23, 52) innerhalb einer ersten vorbestimmten Zeit (t_{w}) kein zweites Signal empfängt, die Energieabgabe unterbrochen wird,
wobei das erste Signal und das zweite Signal zumindest einen durch Unterbrechung der Energieabgabe des Solarmoduls (1) gebildeten Puls umfassen.

9. Unterbrechungseinrichtung (3) nach Anspruch 8, **dadurch gekennzeichnet, daß** ein Energiespeicher (C1, 50) zur Speicherung einer Energiemenge vorgesehen ist, die ausreichend ist, um die Schalteinrichtung (22, 53) mittels der Ansteuereinrichtung (21, 52) dergestalt anzusteuern, daß die Energieabgabe für eine zweite vorbestimmte Zeitdauer (t_{b}) unterbrochen ist.

10. Unterbrechungseinrichtung (3) nach einem der Ansprüche 8 bis 9, **dadurch gekennzeichnet, daß** die Schalteinrichtung (22, 53) zur Unterbrechung der Energieabgabe des Solarmoduls (1) den Energieausgang des Solarmoduls (1) kurzschließt.

11. Unterbrechungseinrichtung (3) nach einem der Ansprüche 8 bis 10, **dadurch gekennzeichnet, daß** die Unterbrechungseinrichtung (3) integral mit dem Solarmodul (1) ausgebildet ist.

12. Unterbrechungseinrichtung (3) nach Anspruch 11, **dadurch gekennzeichnet, daß** die Unterbrechungseinrichtung (3) in einem Laminat des Solarmoduls (1) angeordnet ist.

13. Freigabeeinrichtung (11) die an einem Energieeingang eines Verbrauchers (8, 9, 10; 48), der über eine Energieleitung (6, 7) an ein Solarmodul (1) anschließbar ist, angeordnet ist, zur Freigabe einer Energieübertragung von dem Solarmodul (1) zu dem Verbraucher (8, 9, 10; 48), umfassend:
- eine Empfangseinrichtung (45, 55), die zum Empfang eines ersten Signals von dem Solarmodul (1) über eine Energieleitung geeignet ist; und
- eine Sendeeinrichtung (46, 55), die, wenn die Empfangseinrichtung (45, 55) das erste Signal empfängt, eine zweites Signal an das Solarmodul (1) über die Energieleitung sendet,
wobei das erste Signal und das zweite Signal zumindest einen durch Unterbrechung der Energieübertragung des Solarmoduls (1) gebildeten Puls umfassen.

14. Freigabeeinrichtung (11) nach Anspruch 13, **dadurch gekennzeichnet, daß** eine Schalteinrichtung (47) vorgesehen ist, die den Energieeingang des Verbrauchers (8, 9, 10; 48) zur Bildung des zweiten Signals kurzschließt.

## Claims

1. A protection system for a solar module (1), comprising a solar module-end interrupting device (3) and a consumer-end enabling device (11), wherein the solar module-end interrupting device (3) transmits a first signal to the consumer-end enabling device (11) and interrupts a power transmission of the power being generated by means of the solar module to the consumer via a power line (6, 7) when the solar module-end interrupting device does not receive a second signal from the consumer-end enabling device (11) within a first pre-determined period of time (t_{w}), wherein the first and second signals are transmitted via the power line (6, 7), and wherein the first signal and the second signal comprise at least one pulse which is formed by an interruption of the power transmission of the solar module (1).

2. The protection system according to claim 1, **characterized in that** the solar module-end interrupting device (3) and the consumer-end enabling device (11) each have a switching device (22, T2, 53; 47) to short-circuit the power line (6, 7), wherein the operation of short-circuiting the power line (6, 7) through the switching device of the interrupting device (3) serves to generate the first signal or to interrupt the power transmission.

3. The protection system in accordance with one of the preceding claims, **characterized in that** the solar module-end interrupting device (3) comprises a power storage device (C1, 50), and **in that** power delivery of the solar module (1) is interrupted by means of the switching device (22, T2, 53) of the solar module-end interrupting device (3) for as long until the power storage device (C1, 50) is empty.

4. The protection system in accordance with one of the preceding claims, **characterized in that** the solar module-end interrupting device (3) is integrally formed with the solar module (1).

5. A method for power transmission from a solar module (1) to a consumer (8, 9, 10; 48), comprising the following steps:
- transmitting a first signal to the consumer (8, 9, 10; 48);
- transmitting a second signal to the solar module (1) in response to the first signal, the second signal being an authorisation code of the consumer;
- verifying the second signal to decide whether the consumer (8, 9, 10; 48) is authorised to consume power from the solar module (1);
- enabling of the power transmission, when the second signal is received within a first predetermined period of time (t_{w}) and when the consumer (8, 9, 10; 48) is authorised to consume power;
- interrupting the power transmission, when the second signal is not received within the first predetermined period of time (t_{w}) or when the consumer (8, 9, 10; 48) is not authorised to consume power, wherein the first and the second signal are formed by a pulsed interruption of the power transmission between the solar module (1) and the consumer (8, 9, 10; 48).

6. The method according to claim 5, **characterized in that** the power transmission and/or the signal forming is interrupted by short-circuiting a power line (6, 7) between the solar module (1) and the consumer (8, 9, 10; 48).

7. The method according to claims 5 or 6, **characterized in that** the power transmission will be interrupted during a second predetermined period of time (t_{b}), when the second signal is not received within the first predetermined period of time (t_{w}) or when the consumer (8, 9, 10; 48) is not authorised to consume power.

8. An interrupting device (3) for interrupting a power delivery of a solar module (1), located at a power output of a solar module (1), comprising:
- a transmission device (20, 52) for transmitting a first signal via a power line;
- a receiving device (23, 52) for receiving a second signal via the power line;
- a switching device (22, 53) for interrupting the power transmission of the solar module (1); and
- a driving device (21, 52) to drive the switching device (22, 53) in such a way that the power transmission will be interrupted when the receiving device (23, 52) does not receive a second signal within a first predetermined period of time (t_{w}),
wherein the first signal and the second signal comprise at least one pulse which is formed by an interruption of the power output of the solar module (1).

9. The interrupting device (3) according to claim 8, **characterized in that** a power storage device (C1, 50) to store an amount of power is provided which amount is sufficient to drive the switching device (22, 53) by means of the driving device (21, 52) in such a way that the power transmission is interrupted for a second predetermined period of time (t_{b}).

10. The interrupting device (3) according to claim 8 or 9, **characterized in that** the switching device (22, 53) short-circuits the power output (1) of the solar module (1) to interrupt the power output of the solar module (1).

11. The interrupting device (3) in accordance with one of the claims 8 to 10, **characterized in that** the interrupting device (3) is integrally formed with the solar module (1).

12. The interrupting device (3) according to claim 11, **characterized in that** the interrupting device (3) is accommodated within a laminate of the solar module (1).

13. An enabling device (11) located at a power input of a consumer (8, 9, 10; 48) being connectable to a solar module (1) via a power line (6, 7), to enable a power transmission from the solar module (1) to the consumer (8, 9, 10; 48), comprising:
- a receiving device (45, 55), suitable to receive a first signal from the solar module (1) via a power line; and
- a transmission device (46, 55) which transmits a second signal to the solar module (1) via the power line, when the receiving station (45, 55) receives the first signal,
wherein the first signal and the second signal comprise at least one pulse which is formed by an interruption of the power transmission of the solar module (1).

14. The enabling device (11) according to claim 13, **characterized in that** a switching device (47) is provided, which short-circuits the power input of the consumer (8, 9, 10; 48) to form the second signal.

## Revendications

1. Système de protection pour un module solaire (1), comprenant un dispositif d'interruption côté module solaire (3) et un dispositif de libération côté consommateur (11), dans lequel le dispositif d'interruption côté module solaire (3) envoie au dispositif de libération côté consommateur (11) un premier signal et interrompt un transfert de l'énergie produite au moyen du module solaire au consommateur via une ligne de transport d'énergie (6, 7) lorsque le dispositif d'interruption côté module solaire ne reçoit, dans un premier intervalle de temps prédéterminé (t_{w}), aucun second signal du dispositif de libération côté consommateur (11), dans lequel le premier et le second signal sont transférés via la ligne de transport d'énergie (6, 7), et dans lequel le premier signal et le second signal comprennent au moins une impulsion formée par interruption du transfert d'énergie du module solaire (1).

2. Système de protection selon la revendication 1, **caractérisé en ce que** le dispositif d'interruption côté module solaire (3) et le dispositif de libération côté consommateur (11) présentent, respectivement, un dispositif de commutation (22, T2, 53; 47) pour court-circuiter la ligne de transport d'énergie (6, 7), dans lequel le court-circuit de la ligne de transport d'énergie (6, 7) par le dispositif de commutation du dispositif d'interruption (3) sert à la production du premier signal ou à l'interruption du transfert d'énergie.

3. Système de protection selon l'une quelconque des revendications précédente, **caractérisé en ce que** le dispositif d'interruption côté module solaire (3) comprend un accumulateur d'énergie (C1, 50) et une distribution d'énergie du module solaire (1) au moyen du dispositif de commutation (122, T2, 53) du dispositif d'interruption côté module solaire (3) est interrompue tant que l'accumulateur d'énergie (C1, 50) est vide.

4. Système de protection selon l'une quelconque des revendications précédentes, **caractérisé en ce que** le dispositif d'interruption côté module solaire (3) est formé d'un seul tenant avec le module solaire (1).

5. Procédé de transfert d'énergie d'un module solaire (1) à un consommateur (8, 9, 10; 48) comprenant les étapes suivantes :
- émission d'un premier signal au consommateur (8, 9, 10; 46);
- émission d'un second signal au module solaire (1) en réponse au premier signal, le second signal étant un code de validation du consommateur;
- contrôle du second signal pour décider si le consommateur (8, 9, 10; 48) est autorisé à prélever de l'énergie du module solaire (1);
- libération du transfert d'énergie lorsque le second signal est reçu dans un premier intervalle de temps prédéterminé (t_{w}) et que le consommateur (8, 9, 10; 48) est autorisé à prélever cette énergie;
- interruption du transfert d'énergie lorsque le second signal n'est pas reçu dans le premier intervalle de temps prédéterminé (t_{w}) ou que le consommateur (8, 9, 10; 48) n'est pas autorisé à prélever de l'énergie, le premier et le second signal étant formés par une interruption pulsée du transfert d'énergie entre le module solaire (1) et le consommateur (8, 9, 10; 48).

6. Procédé selon la revendication 5, **caractérisé en ce que** le transfert d'énergie et/ou la formation du signal est ou sont interrompus par court-circuitage d'une ligne de transfert d'énergie (6, 7) entre le module solaire (1) et le consommateur (8, 9, 10; 48).

7. Procédé selon l'une quelconque des revendications 5 ou 6, **caractérisé en ce que**, lorsque le second signal n'est pas reçu dans le premier intervalle de temps prédéterminé (t_{w}) ou que le consommateur (8, 9, 10; 48) n'est pas autorisé à prélever de l'énergie, le transfert d'énergie est interrompu au cours d'une seconde période de temps prédéterminée (t_{b}).

8. Dispositif d'interruption (3) pour interrompre une distribution d'énergie d'un module solaire (1), qui est agencé à une sortie de transport d'énergie d'un module solaire (1), comprenant :
- un dispositif d'émission (20, 52) pour envoyer un premier signal via une ligne de transport d'énergie;
- un dispositif de réception (23, 52) pour recevoir un second signal via la ligne de transport d'énergie;
- un dispositif de commutation (22, 53) pour interrompre la distribution d'énergie du module solaire (1); et
- un dispositif de commande (21, 52) pour commander le dispositif de commutation (22, 53) de sorte que, lorsque le dispositif de réception (23, 52) ne reçoit, dans un premier intervalle de temps prédéterminé (t_{w}), aucun second signal, la distribution d'énergie soit interrompue,
le premier signal et le second signal comprenant au moins une impulsion formée par interruption de la distribution d'énergie du module solaire (1).

9. Dispositif d'interruption (3) selon la revendication 8, **caractérisé en ce que** l'accumulateur d'énergie (C1, 50) est prévu pour stocker une quantité d'énergie qui soit suffisante pour commander le dispositif de commutation (22, 53) au moyen du dispositif de commande (21, 52) de sorte que la distribution d'énergie soit interrompue sur une seconde période de temps prédéterminée (t_{b}).

10. Dispositif d'interruption (3) selon l'une quelconque des revendications 8 à 9, **caractérisé en ce que** le dispositif de commutation (22, 53) court-circuite la sortie d'énergie du module solaire (1) pour interrompre la distribution d'énergie du module solaire (1).

11. Dispositif d'interruption (3) selon l'une quelconque des revendications 8 à 10, **caractérisé en ce que** le dispositif d'interruption (3) est formé d'un seul tenant avec le module solaire (1).

12. Dispositif d'interruption (3) selon la revendication 11, **caractérisé en ce que** le dispositif d'interruption (3) est aménagé dans un stratifié du module solaire (1).

13. Dispositif de libération (11) qui est aménagé à une entrée d'énergie d'un consommateur (8, 9, 10; 48), qui peut être raccordé via une ligne de transport d'énergie (6, 7) à un module solaire (1), pour libérer un transfert d'énergie du module solaire (1) au consommateur (8, 9, 10; 48), comprenant :
- un dispositif de réception (45, 55), qui convient à la réception d'un premier signal du module solaire (1) via une ligne de transport d'énergie; et
- un dispositif d'émission (46, 55), qui, lorsque le dispositif de réception (45, 55) reçoit le premier signal, envoie un second signal au module solaire (1) via la ligne de transport d'énergie,
le premier signal et le second signal comprenant au moins une impulsion formée par interruption du transfert d'énergie du module solaire (1).

14. Dispositif de libération (11) selon la revendication 13, **caractérisé en ce qu'**un dispositif de commutation (47) est prévu pour court-circuiter l'entrée d'énergie du consommateur (8, 9, 10; 48) afin de former le second signal.
